# EUROPEAN PATENT SPECIFICATION

(11) **EP 3 631 221 B1**
(45) Date of publication and mention of the grant of the patent: **27.04.2022**
(21) Application number: 18731344.0
(22) Date of filing: 30.05.2018
(51) Int. Cl.: F16C 27/02, F16D 3/06, F16D 3/68

(54) **BEARING UNIT FOR A TURBOCHARGER ROTOR**
LAGEREINHEIT FÜR EINEN ROTOR EINES ABGASTURBOLADERS
UNITE DE PALIER POUR UN ROTOR DE TURBOCOMPRESSEUR

(30) Priority: 31.05.2017 DE 102017209237
(43) Date of publication of application: 08.04.2020
(73) Proprietor: Borgwarner Inc., Auburn Hills, Michigan 48326 (US)
(72) Inventor: FICKERT, Marc, 67657 Kaiserslautern (DE)
(74) Representative: Peterreins Schley
(86) International application number: PCT/US2018/035078
(87) International publication number: WO 2018/222682

(56) References cited:
- EP-A2- 2 392 783
- DE-C1- 4 002 583
- JP-A- 2002 048 135
- US-A- 4 838 711
- US-A1- 2013 236 336

## Description

### Field of the Invention

The present invention relates to a bearing unit for a turbocharger rotor and a charging device comprising a corresponding bearing unit.

### Background Information

Increasingly more vehicles of the more recent generation are equipped with charging devices. In order to achieve the target demands and the legal requirements, it is imperative to promote development in the complete drive train and also to optimize the individual components as well as the system as a whole with respect to their reliability and efficiency.

Exhaust gas turbochargers are known, for example, in which a turbine with a turbine wheel is driven by the exhaust gas flow of the internal combustion engine. A compressor wheel, which is arranged with a turbine wheel on a mutual rotor, compresses the fresh air taken in for the engine. By this means, the air or oxygen amount, available to the engine for combustion, is increased, which in turn leads to an increased output of the internal combustion engine.

Known charging devices comprise at least a compressor housing with a compressor wheel arranged therein, and a bearing housing, in which the rotor is mounted. For radial bearing, the rotor may be arranged, for example, in a bearing bush, which is in turn positioned in a hole in the bearing housing. To avoid a co-rotation of the bearing bush with the rotor, means are known for preventing a rotation of the bearing bush with respect to the bearing housing. For example, rigid locking plates, which are arranged in the axial direction between the bearing bush and an axial bearing, are known for this. Due to the spatial requirements, the overhang of the compressor wheel with respect to the radial bearing of the rotor is expanded, for example, which negatively effects the rotor dynamics.

US 2013/236 336 A1 discloses an exhaust-gas turbocharger having a compressor which has a compressor wheel in a compressor housing, a turbine which has a turbine wheel in a turbine housing, a bearing housing which receives a static bearing bush for a rotor shaft and which has, at the compressor side, a bearing housing cover, and bearing bush rotation prevention means. The bearing bush rotation prevention means of one embodiment have at least one lug supported in the bearing housing and which engages into two grooves of the bearing. The grooves are arranged diametrically oppositely on an outer circumferential region of the bearing bush.

EP 2 392 783 A2 discloses a spring for positioning a turbocharger bearing in a housing. The spring includes a free standing inner diameter, a free standing outer diameter and a substantially sinusoidal shape to provide an inward radial bias and an outward radial bias. The spring balances the inward radial bias with the outward radial bias to thereby position a turbocharger bearing in a housing.

DE 40 02 583 C1 discloses an exhaust gas turbocharger assembly including a sleeve floatingly arranged in a bore of a bearing housing for radial mounting of a shaft. An element is arranged in the bearing housing to prevent rotation. The element is arranged in a groove of the sleeve and at the same time in a recess of the bearing housing.

US 4 838 711 A discloses a bearing for an exhaust-gas turbocharger including a sleeve which is arranged in a bore of a bearing housing and which is prevented from rotating. The sleeve contains, at each of its two axial end regions, an inner and an outer bearing face and at least two openings between the end regions. Sleeve rotation is prevented in a functionally reliable manner and at a low construction cost by a preferably annular spring element which is elastic in the circumferential direction, and which engages by means of a axially bent first end in a groove in the sleeve. The bearing housing has a recess which opens into the bore of the bearing housing radially relative to the shaft and in which the radially outwardly bent second end of the spring element engages.

JP 2002 048135 A discloses a bearing structure having a semi-float bearing for supporting rotation of a rotating shaft, and more particularly a bearing structure capable of stopping the semi-float bearing from rotating together with the rotating shaft.

The object of the present invention is consequently to provide an optimized bearing unit for a turbocharger rotor with an improved anti-rotation means.

### Brief Summary of the Invention

The present invention relates to a bearing unit according to Claim 1 and a charging device according to Claim 13.

The bearing unit according to the invention for a turbocharger rotor comprises a bearing housing and a bearing bush which is arranged in a central hole for radial mounting of a turbocharger rotor in the bearing housing. The bearing unit additionally comprises an elastic anti-rotation means, wherein the anti-rotation means are arranged radially between the bearing bush and the bearing housing and are designed to prevent a rotation of the bearing bush relative to the bearing housing. A positive-locking connection is formed between the anti-rotation means and the bearing housing to prevent a rotation of the bearing bush relative to the bearing housing. Further, the anti-rotation means do not limit an axial movement of the bearing bush relative to the bearing housing in at least one direction. The elastic anti-rotation means, which are arranged between the bearing housing and the bearing bush, are space saving, as then no space must be provided in the axial direction for anti-rotation means next to the bearing bush. This space saving has advantages not only with regard to installation space, but also ensures that the overhang of the compressor wheel is relatively short with respect to the radial bearing of the turbocharger rotor. A short overhang positively affects the dynamics of the rotor (rotor dynamics). Furthermore, the arrangement of the anti-rotation means contributes to a simple assembly of the bearing bush in the bearing housing, and additionally ensures a non-destructive disassembly of the combination of the bearing bush and anti-rotation means.

Due to the arrangement of the anti-rotation means on the outside around the bearing bush, between the bearing bush and the bearing housing, the inner bearing surface of the bearing bush, which accommodates the turbocharger rotor, additionally remains unaffected. Furthermore, the anti-rotation means may be arranged on any axial position, adapted to the respective application, along the outer side of the bearing bush. Designers are thus not limited to a predefined axial position for the anti-rotation means.

The elastic configuration of the anti-rotation means effects an advantageous damped transmission of oscillations or vibrations of the bearing bush to the bearing housing. Due to the ramp-like instead of impact-like introduction of the load, both wear and also noise formation are reduced or avoided.

Additional details and features are subsequently described by way of the figures. The invention is defined in the appended claims.

### Brief Description of the Drawings

- **Figure 1**: shows a cutaway view of one embodiment of the bearing unit according to the invention;
- **Figure 2**: shows a perspective view of anti-rotation means of the bearing unit not part of the invention;
- **Figure 3**: shows a perspective view of an embodiment of anti-rotation means of a bearing unit according to the invention;
- **Figure 4**: shows a cutaway view of the implementation of anti-rotation means according to fig. 2, not part of the invention.
- **Figure 5**: shows a cutaway view of a bearing bush arranged in a bearing housing of the bearing unit according to the invention;
- **Figure 6**: shows a cutaway view of a further embodiment of the invention.

### Detailed Description of the Invention

In the scope of this application, radial surfaces/lateral surfaces refer to surfaces that are arranged in the planes that lie perpendicular to the longitudinal axis/axis of rotation 500 of the turbocharger rotor.

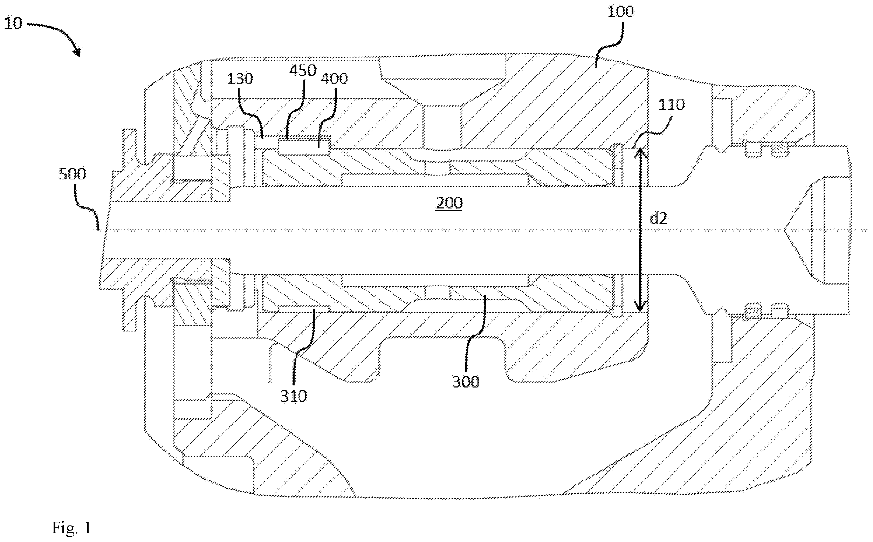

**Figure 1** shows a cutaway view of the bearing unit 10 according to the invention for a turbocharger rotor 200. Bearing unit 10 comprises a bearing housing 100 and a bearing bush 300, which is arranged in a central hole 110 of bearing housing 100 and functions for the radial bearing of a turbocharger rotor 200 in bearing housing 100. Bearing unit 10 additionally contains elastic anti-rotation means 400. Anti-rotation means 400 are arranged radially between bearing bush 300 and bearing housing 100 and are designed to prevent a rotation of bearing bush 300 relative to bearing housing 100. Elastic anti-rotation means 400, which are arranged between bearing housing 100 and bearing bush 300, have the advantage of being very space saving, as no space must be provided for anti-rotation means in the axial direction next to bearing bush 300 (e.g., between bearing bush 300 and an axial bearing housing). This space saving has advantages not only with regard to installation space, but also ensures that the overhang of the compressor wheel is relatively short with respect to the radial bearing of turbocharger rotor 200. A short overhang positively affects the dynamics of the rotor (rotor dynamics). Furthermore, the arrangement of anti-rotation means 400 contributes to a simple assembly of bearing bush 300 in bearing housing 100, and additionally ensures a non-destructive disassembly of the combination of bearing bush 300 and anti-rotation means 400.

Due to the arrangement according to the invention of anti-rotation means 400 on the outside around bearing bush 300, between bearing bush 300 and bearing housing 100, the inner bearing surface of bearing bush 300, which accommodates turbocharger rotor 200, additionally remains completely unaffected. Furthermore, anti-rotation means 400 may be arranged in any axial position, adapted to the respective application, along the outer side of bearing bush 300. Designers are thus not limited to a predefined axial position for anti-rotation means 400 along bearing bush 300 or in hole 110 of bearing housing 100.

The elastic configuration of anti-rotation means 400 effects an advantageous damped transmission of oscillations or vibrations of bearing bush 300 to bearing housing 100. Due to the ramp-like instead of impact-like introduction of the load, both wear and also noise formation are reduced or avoided.

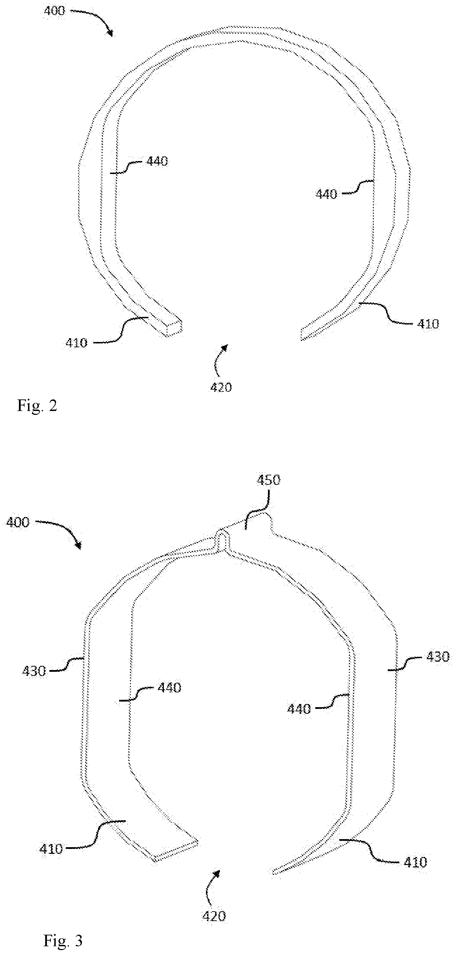

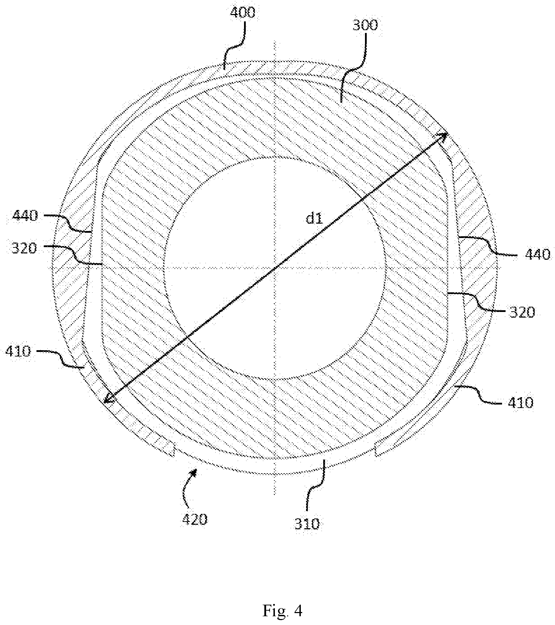

Anti-rotation means 400 may themselves have different configurations and be designed to limit an axial movement of bearing bush 300 in no directions or only in one direction relative to bearing housing 100. An axial movement thereby relates to a movement in the direction of the axis of rotation of turbocharger rotor 200, which corresponds to longitudinal axis 500 of central hole 110. In the following, different embodiments of anti-rotation means 400 and bearing bush 300 for bearing unit 10 according to the invention will be described with the aid of **Figure** 3, 5 and 6. Figures 2 and 4 are further examples not part of the invention.

First, with reference to the limitation of the degree of movement of bearing bush 300, anti-rotation means 400 from **Figure 2** and **Figure 4** generally limits the movement of bearing bush 300 relative to bearing housing 100 only in one degree of freedom, namely in freedom of rotation about longitudinal axis 500. Thus, bearing bush 300 is not limited by anti-rotation means 400 in its movement in the direction of longitudinal axis 500. In contrast, a protrusion 450 of anti-rotation means 400, shown in **Figure 1****,** **Figure 3****,** and **Figure 5****,** engages in a recess or groove 130 in bearing housing 100. Thus, the movement of anti-rotation means 400 is limited in the axial direction in at least one direction, in the case shown in **Figure 1** in the direction toward the turbine side) by the length of recess 130, as protrusion 450 "strikes" (positive locking contact) on the end of recess 130 on a radial side wall of recess 130, and thus a positioning of anti-rotation means 400 is defined in this direction. Alternatively, it is also possible that the movement of bearing bush 300 is limited in one axial direction by anti-rotation means 400 from **Figure 2** and **Figure 4****,** and thus the position of anti-rotation means 400 is defined in this direction. This may be implemented, for example, by a shoulder along central hole 110, on which a lateral wall of anti-rotation means 400 strikes. At this point, it should be clarified that no axial thrust is accommodated by these means for axial positioning of the combination made from anti-rotation means 400 and bearing cartridge 300. A separate axial bearing may be provided for this case.

To prevent a rotation of bearing bush 300 relative to bearing housing 100, a frictional engagement is formed between anti-rotation means 400 and bearing housing 100. These types of anti-rotation means 400 are depicted, for example, in **Figure 2** and **Figure 4****.** If (only) a frictional connection is formed between anti-rotation means 400 and bearing housing 100, then anti-rotation means 400 may simultaneously function as an overload clutch and thus as protection from overloads. This means, if the forces, which are transmitted by turbocharger rotor 200 via bearing bush 300 and anti-rotation means 400 to bearing housing 100 are too large, then the frictional connection between anti-rotation means 400 and bearing housing 100 disengages, and a "slip through" of bearing bush 300 occurs, so that bearing bush 300 rotates relative to bearing housing 100.

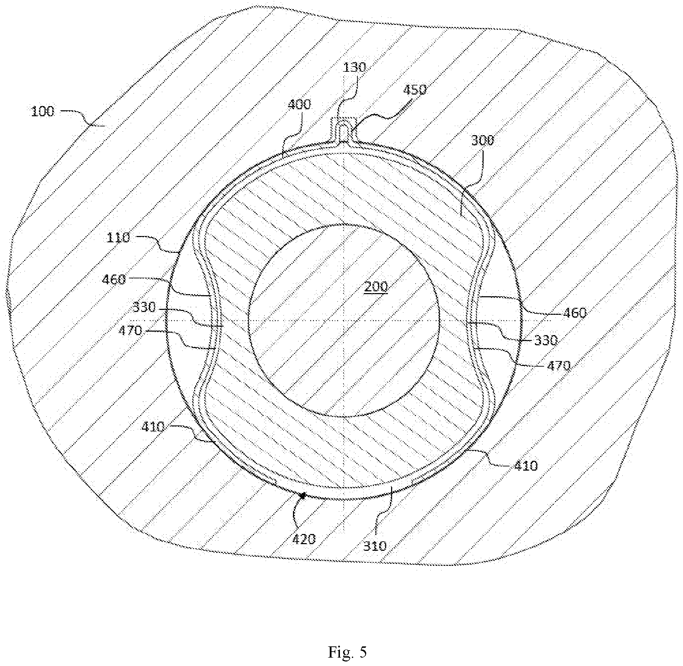

According to the invention, a positive-locking is formed between anti-rotation means 400 and bearing housing 100 to prevent a rotation of bearing bush 300 relative to bearing housing 100. These types of anti-rotation means 400 are depicted, for example, in Figure 1, Figure 3, and Figure 5. As is quite clear in Figure 3 and Figure 5, anti-rotation means 400 has at least one protrusion 450 facing radially outward for this. Protrusion 450 engages in recess 130 in central hole 110 of bearing housing 100 (see Figure 1 and Figure 5) to generate a positive-locking connection between anti-rotation means 400 and bearing housing 100. Thus, a rotation of bearing bush 300 is prevented relative to bearing housing 100. Recess 130 may thereby extend axially in a first direction up to one end of central hole 110 so that bearing bush 300 with anti-rotation means 400 mounted thereon may be pressed/pushed into bearing housing 100, and may also be removed again from bearing housing 100 without destroying bearing bush 300 or anti-rotation means 400. Recess 130 is delimited in a second direction and may thus also function, as already mentioned above, as an axial positioning for anti-rotation means 400.

As is particularly clear in **Figure 2** and **Figure 3****,** elastic anti-rotation means 400 is configured as an annular, spring elastic clamp, wherein the clamp does not have a closed annular shape. Anti-rotation means 400 or the clamp may be machined from a solid material or manufactured from an unshaped sheet metal. The clamp shape of anti-rotation means 400 is defined by first and second legs 410, wherein an opening 420 is formed between the two leg ends. An increased flexibility of elastic anti-rotation means 400 results from this. To mount anti-rotation means 400, the two legs 410 may be bent apart from one another. If anti-rotation means 400 is positioned at the corresponding mounting position along bearing bush 300, legs 410 engage in accommodation area 310 of bearing bush 300, provided for this (see e.g., **Figure 1****).** Due to the spring effect of elastic anti-rotation means 400, legs 410 are biased radially inward, in the direction of accommodation area 310, in such a way that anti-rotation means 400 remains in its position in accommodation area 310 of bearing bush 300 (even if bearing bush 300 is not yet arranged in bearing housing 100) (see e.g., **Figure 4****).**

In order to be able to generate the frictional engagement, as already mentioned above, between anti-rotation means 400 and bearing housing 100, a transition fit or an interference fit may be provided between anti-rotation means 400 and hole 110 in bearing housing 100. This means that an outer diameter d1 of anti-rotation means 400 (see **Figure 5****)** in at least the unloaded state of anti-rotation means 400 is greater than or equal to an inner diameter d2 of central hole 110 (see **Figure 1****).** This is at least the case in one area of central hole 110 in which anti-rotation means 400 is arranged.

The possible geometric configurations of anti-rotation means 400 or bearing bush 300 are subsequently described in greater detail. For example, an inner diameter of anti-rotation means 400 and an outer periphery of bearing bush 300, located opposite the inner periphery of the bearing bush, may have geometric shapes adapted to one another which prevent a rotation of bearing bush 300 relative to anti-rotation means 400. The outer periphery of anti-rotation means 400 from **Figure 4** is configured as circular, the outer periphery of the anti-rotation means from **Figure 2** is polygonal, and the outer periphery of anti-rotation means 400 from **Figure 3** is polygonal (alternatively also circular, see **Figure 5****)** with lateral flattened areas 430 (alternatively with concave indentations 460, see **Figure** 5). All of these geometric features may be combined in any way with one another to generate the desired securing effect against rotation and optionally the above-mentioned effect as overload clutch.

Corresponding to the outer periphery of anti-rotation means 400, the inner periphery of anti-rotation means 400 may be configured as circular or polygonal, and may have straight sections 440 extending parallel to one another or convex projections 470 on opposite lateral areas of anti-rotation means 400 (see **Figure 2, Figure 3****,** **Figure 4****,** and **Figure 5****).** Accommodation area 310 of bearing bush 300 may be configured to adapt in correspondence with the geometric configuration of anti-rotation means 400. Accommodation area 310 is thereby configured in particular as a groove extending on an outer periphery of bearing bush 300. The groove may extend over the entire periphery or over only a part of the periphery of bearing bush 300. For example, accommodation area 310 may have flattened areas 320 (see **Figure 4****)** extending parallel to one another on opposite peripheral areas. These flattened areas 320 are adapted to anti-rotation means 400 from **Figure 2, Figure 3****,** and **Figure 4****.** Alternatively, anti-rotation means 300 may also have concave indentations 330 (see **Figure 5****),** wherein concave indentations 330 may interact with convex projections 470 of anti-rotation means 400 from **Figure 5****,** to prevent a rotation of bearing bush 300 relative to anti-rotation means 400.

As is especially clear, for example, from the gap between anti-rotation means 400 and bearing bush 300 in **Figure 4** and **Figure 5****,** a rotation of bearing bush 300 relative to anti-rotation means 400 is not completely suppressed. A certain play is provided between bearing bush 300 and anti-rotation means 400 so that a minimal rotation is possible between anti-rotation means 400 and bearing bush 300. This play promotes uniform load transmission from turbocharger rotor 200 via bearing bush 300 and anti-rotation means 400 to bearing housing 100. This play is necessary so that only the degree of rotational freedom is limited, and a radial deflection of bearing bush 300 remains possible.

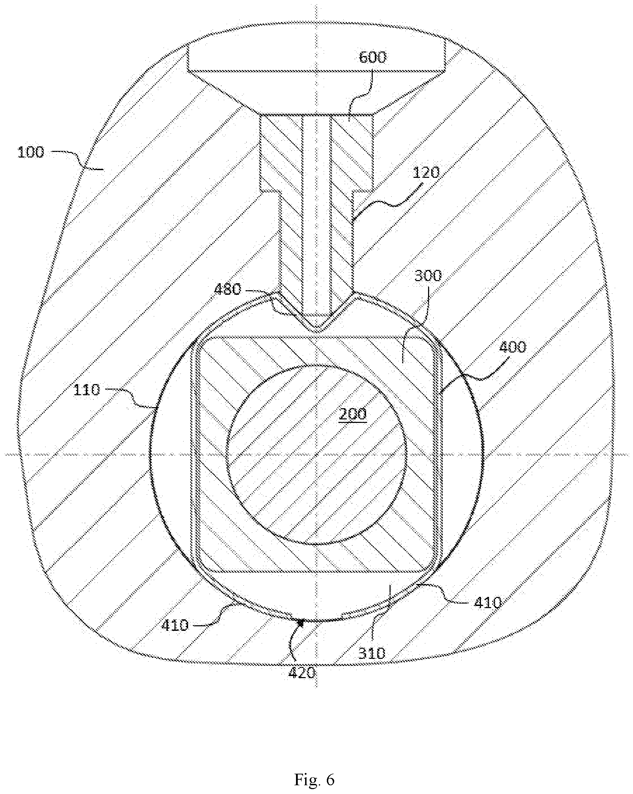

**Figure 6** shows another embodiment of bearing unit 10 according to the invention. In this embodiment, bearing housing 100 has at least one radial hole 120 in the area of anti-rotation means 400 to accommodate a locking pin 600. Locking pin 600 engages through hole 120 into a projection 480 of anti-rotation means 400 facing radially inward to form a positive-locking connection between bearing housing 100 and anti-rotation means 400. Due to a simple geometric configuration of anti-rotation means 400 and bearing bush 300, a positive-locking connection is thus possible between bearing housing 100 and anti-rotation means 400 via one locking pin 600 (more than one locking pin may be provided; the locking pin may, for example, by a screw or a bolt). Due to a corresponding embodiment of bearing bush 300 in this area, a positive locking between bearing bush 300 and locking pin 600 or bearing housing 100 is prevented to maintain the elasticity between bearing bush 300 and anti-rotation means 400. Thus, for example, the cross section of bearing bush 300 may be configured at least in this area as square (with, for example, rounded corners as shown in **Figure 6****).** Alternatively, a flattened area of the outer contour of bearing bush 300 or of accommodation area 310 in bearing bush 300 or a recess may be provided in this area to prevent a positive locking between bearing bush 300 and locking pin 600 or bearing housing 100.

The invention additionally comprises a charging device for an internal combustion engine, wherein the charging device comprises a compressor with a compressor housing and a compressor wheel arranged therein, and a bearing unit 10 . The charging device may, for example, be an exhaust gas turbocharger and may additionally comprise a turbine with a turbine housing and a turbine wheel arranged therein.

## Claims

1. A bearing unit (10) for a turbocharger rotor (200) comprising
a bearing housing (100); and
a bearing bush (300) which is arranged in a central hole (110) for radial bearing of a turbocharger rotor (200) in the bearing housing (100);
an elastic anti-rotation means (400), wherein the anti-rotation means (400) are arranged radially between the bearing bush (300) and the bearing housing (100) and are designed to prevent a rotation of the bearing bush (300) relative to the bearing housing (100); and
wherein a positive-locking connection is formed between the anti-rotation means (400) and the bearing housing (100) to prevent a rotation of the bearing bush (300) relative to the bearing housing (100);
**characterized in that** the anti-rotation means (400) do not limit an axial movement of the bearing bush (300) relative to the bearing housing (100) in at least one direction.

2. The bearing unit according to Claim 1, **characterized in that** a frictional engagement is formed between the anti-rotation means (400) and the bearing housing (100) to prevent a rotation of the bearing bush (300) relative to the bearing housing (100).

3. The bearing unit according to any one of the preceding claims, **characterized in that** the elastic anti-rotation means (400) are configured as an annular, spring-elastic clamp.

4. The bearing unit according to Claim 3, **characterized in that** the clamp has a non-closed annular shape.

5. The bearing unit according to Claim 3 or Claim 4, **characterized in that** an outer diameter (d1) of the anti-rotation means (400) in at least the unloaded state of the anti-rotation means (400) is greater than or equal to an inner diameter (d2) of the central hole (110), at least in one area of the central hole (110) in which the anti-rotation means (400) are arranged.

6. The bearing unit according to any one of Claims 3 through 5, **characterized in that** the clamp has at least one protrusion (450) facing radially outward, wherein the protrusion (450) engages in a recess (130) in the central hole (110) of the bearing housing to provide a positive-locking connection between the anti-rotation means (400) and the bearing housing (100) to prevent a rotation of the bearing bush (300) relative to the bearing housing (100).

7. The bearing unit according to any one of the preceding claims, **characterized in that** an inner periphery of the anti-rotation means (400) and an outer periphery of the bearing bush (300), located opposite the inner periphery of the bearing bush, have geometric shapes adapted to one another which prevent a rotation of the bearing bush (300) relative to the anti-rotation means (400).

8. The bearing unit according to any one of the preceding claims, **characterized in that** an outer periphery of the anti-rotation means (400) is configured as circular, polygonal, or as circular with lateral flattened areas (430) or concave indentations (460).

9. The bearing unit according to any one of the preceding claims, **characterized in that** the inner periphery of the anti-rotation means (400) is configured as circular or polygonal, wherein straight sections (440) extending parallel to one another or convex projections (470) are provided on opposite lateral areas of the anti-rotation means (400).

10. The bearing unit according to any one of the preceding claims, **characterized in that** the bearing bush (300) has an accommodation area (310) for the anti-rotation means (400), in particular wherein the accommodation area (310) is a groove extending on an outer periphery of the bearing bush (300).

11. The bearing unit according to Claim 10, if Claim 10 is dependent on Claim 9, **characterized in that** the accommodation area (310) has flattened areas (320) extending parallel to one another or concave indentations (330) on opposite peripheral areas, wherein the flattened areas (320) or the concave indentations (330) interact with the straight sections (440) or the convex projections (470) of the anti-rotation means (400) to prevent a rotation of the bearing bush (300) relative to the anti-rotation means (400).

12. The bearing unit according to any one of the preceding claims, **characterized in that** the bearing housing (100) has at least one radial hole (120) in the area of the anti-rotation means (400) for accommodating a locking pin (600), wherein the locking pin (600) engages through the hole (120) into a projection (480) of the anti-rotation means (400) facing radially inward to form a positive-locking connection between the bearing housing (100) and the anti-rotation means (400).

13. A charging device for an internal combustion engine, comprising a compressor with a compressor housing and a compressor wheel arranged therein; and
a bearing unit (10) according to any one of the preceding claims.

14. The charging device according to Claim 13, **characterized in that** the charging device is an exhaust gas turbocharger, and additionally comprises a turbine with a turbine housing and a turbine wheel arranged therein.

## Patentansprüche

1. Lagereinheit (10) für einen Turboladerrotor (200), umfassend:
ein Lagergehäuse (100); und
eine Lagerbuchse (300), die in einer zentralen Bohrung (110) zur radialen Lagerung eines Turboladerrotors (200) im Lagergehäuse (100) angeordnet ist;
eine elastische Verdrehsicherung (400), wobei die Verdrehsicherung (400) radial zwischen der Lagerbuchse (300) und dem Lagergehäuse (100) angeordnet ist und dazu ausgelegt ist, eine Drehung der Lagerbuchse (300) relativ zum Lagergehäuse (100) zu verhindern; und
wobei eine formschlüssige Verbindung zwischen der Verdrehsicherung (400) und dem Lagergehäuse (100) gebildet ist, um eine Drehung der Lagerbuchse (300) relativ zum Lagergehäuse (100) zu verhindern;
**dadurch gekennzeichnet, dass** die Verdrehsicherung (400) eine axiale Bewegung der Lagerbuchse (300) relativ zum Lagergehäuse (100) in mindestens einer Richtung nicht begrenzt.

2. Lagereinheit gemäß Anspruch 1, **dadurch gekennzeichnet, dass** zwischen der Verdrehsicherung (400) und dem Lagergehäuse (100) ein Reibschluss gebildet wird, um eine Drehung der Lagerbuchse (300) relativ zum Lagergehäuse (100) zu verhindern.

3. Lagereinheit gemäß einem der vorhergehenden Ansprüche, **dadurch gekennzeichnet, dass** die elastische Verdrehsicherung (400) als ringförmige, federelastische Klammer ausgebildet ist.

4. Lagereinheit gemäß Anspruch 3, **dadurch gekennzeichnet, dass** die Klammer eine nicht geschlossene Ringform aufweist.

5. Lagereinheit gemäß Anspruch 3 oder Anspruch 4, **dadurch gekennzeichnet, dass** ein Außendurchmesser (d1) der Verdrehsicherung (400) mindestens im unbelasteten Zustand der Verdrehsicherung (400) mindestens in einem Bereich der zentralen Bohrung (110), in dem die Verdrehsicherung (400) angeordnet ist, größer oder gleich einem Innendurchmesser (d2) der zentralen Bohrung (110) ist.

6. Lagereinheit gemäß einem der Ansprüche 3 bis 5, **dadurch gekennzeichnet, dass** die Klammer mindestens einen radial nach außen weisenden Vorsprung (450) aufweist, wobei der Vorsprung (450) in eine Aussparung (130) in der zentralen Bohrung (110) des Lagergehäuses eingreift, um eine formschlüssige Verbindung zwischen der Verdrehsicherung (400) und dem Lagergehäuse (100) herzustellen, um eine Drehung der Lagerbuchse (300) relativ zum Lagergehäuse (100) zu verhindern.

7. Lagereinheit gemäß einem der vorhergehenden Ansprüche, **dadurch gekennzeichnet, dass** ein Innenumfang der Verdrehsicherung (400) und ein Außenumfang der Lagerbuchse (300), der dem Innenumfang der Lagerbuchse gegenüberliegt, aneinander angepasste geometrische Formen aufweisen, die eine Drehung der Lagerbuchse (300) relativ zur Verdrehsicherung (400) verhindern.

8. Lagereinheit gemäß einem der vorhergehenden Ansprüche, **dadurch gekennzeichnet, dass** ein Außenumfang der Verdrehsicherung (400) kreisförmig, polygonal oder kreisförmig mit seitlichen Abflachungen (430) oder konkaven Einbuchtungen (460) ausgebildet ist.

9. Lagereinheit gemäß einem der vorhergehenden Ansprüche, **dadurch gekennzeichnet, dass** der Innenumfang der Verdrehsicherung (400) kreisförmig oder polygonal ausgebildet ist, wobei an gegenüberliegenden Seitenbereichen der Verdrehsicherung (400) parallel zueinander verlaufende gerade Abschnitte (440) oder konvexe Vorsprünge (470) vorgesehen sind.

10. Lagereinheit gemäß einem der vorhergehenden Ansprüche, **dadurch gekennzeichnet, dass** die Lagerbuchse (300) einen Aufnahmebereich (310) für die Verdrehsicherung (400) aufweist, wobei der Aufnahmebereich (310) insbesondere eine Nut ist, die sich an einem Außenumfang der Lagerbuchse (300) erstreckt.

11. Lagereinheit gemäß Anspruch 10, falls Anspruch 10 von Anspruch 9 abhängt, **dadurch gekennzeichnet, dass** der Aufnahmebereich (310) an gegenüberliegenden Umfangsbereichen parallel zueinander verlaufende Abflachungen (320) oder konkave Vertiefungen (330) aufweist, wobei die Abflachungen (320) oder die konkaven Vertiefungen (330) mit den geraden Abschnitten (440) oder den konvexen Vorsprüngen (470) der Verdrehsicherung (400) zusammenwirken, um eine Drehung der Lagerbuchse (300) relativ zur Verdrehsicherung (400) zu verhindern.

12. Lagereinheit gemäß einem der vorhergehenden Ansprüche, **dadurch gekennzeichnet, dass** das Lagergehäuse (100) im Bereich der Verdrehsicherung (400) mindestens eine radiale Bohrung (120) zur Aufnahme eines Verriegelungsstiftes (600) aufweist, wobei der Verriegelungsstift (600) durch die Bohrung (120) in einen radial nach innen weisenden Vorsprung (480) der Verdrehsicherung (400) eingreift, um eine formschlüssige Verbindung zwischen dem Lagergehäuse (100) und der Verdrehsicherung (400) herzustellen.

13. Ladevorrichtung für einen Verbrennungsmotor, umfassend:
einen Kompressor mit einem Kompressorgehäuse und einem darin angeordneten Kompressorrad; und
eine Lagereinheit (10) gemäß einem der vorhergehenden Ansprüche.

14. Ladevorrichtung gemäß Anspruch 13, **dadurch gekennzeichnet, dass** die Ladevorrichtung ein Abgasturbolader ist und zusätzlich eine Turbine mit einem Turbinengehäuse und einem darin angeordneten Turbinenrad umfasst.

## Revendications

1. Unité de palier (10) pour un rotor de turbocompresseur (200) comprenant :
un boîtier de palier (100) ; et
une douille de palier (300) qui est agencée dans un trou central (110) pour le support radial d'un rotor de turbocompresseur (200) dans le boîtier de palier (100) ;
des moyens anti-rotation élastiques (400), les moyens anti-rotations (400) étant agencés radialement entre la douille de palier (300) et le boîtier de palier (100) et étant conçus pour empêcher une rotation de la douille de palier (300) par rapport au boîtier de palier (100) ; et
une connexion à verrouillage positif étant formée entre les moyens anti-rotation (400) et le boîtier de palier (100) pour empêcher une rotation de la douille de palier (300) par rapport au boîtier de palier (100) ;
**caractérisée en ce que** les moyens anti-rotation (400) ne limitent pas un mouvement axial de la douille de palier (300) par rapport au boîtier de palier (100) dans au moins une direction.

2. Unité de palier selon la revendication 1, **caractérisée en ce qu'**une mise en prise par friction est formée entre les moyens anti-rotation (400) et le boîtier de palier (100) pour empêcher une rotation de la douille de palier (300) par rapport au boîtier de palier (100).

3. Unité de palier selon l'une quelconque des revendications précédentes, **caractérisée en ce que** les moyens anti-rotation élastiques (400) sont configurés comme un dispositif de serrage élastique annulaire.

4. Unité de palier selon la revendication 3, **caractérisée en ce que** le dispositif de serrage a une forme annulaire non fermée.

5. Unité de palier selon la revendication 3 ou la revendication 4, **caractérisée en ce qu'**un diamètre extérieur (d1) des moyens anti-rotation (400) dans au moins l'état non chargé des moyens anti-rotation (400) est supérieur ou égal à un diamètre intérieur (d2) du trou central (110), au moins dans une zone du trou central (110) dans laquelle sont agencés les moyens anti-rotation (400).

6. Unité de palier selon l'une quelconque des revendications 3 à 5, **caractérisée en ce que** le dispositif de serrage a au moins une saillie (450) faisant face radialement vers l'extérieur, la saillie (450) venant en prise dans un évidement (130) dans le trou central (110) du boîtier de palier pour fournir une connexion à verrouillage positif entre les moyens anti-rotation (400) et le boîtier de palier (100) pour empêcher une rotation de la douille de palier (300) par rapport au boîtier de palier (100).

7. Unité de palier selon l'une quelconque des revendications précédentes, **caractérisée en ce qu'**une périphérie intérieure des moyens anti-rotation (400) et une périphérie extérieure de la douille de palier (300), située à l'opposé de la périphérie intérieure de la douille de palier, ont des formes géométriques adaptées l'une à l'autre qui empêchent une rotation de la douille de palier (300) par rapport aux moyens anti-rotation (400).

8. Unité de palier selon l'une quelconque des revendications précédentes, **caractérisée en ce qu'**une périphérie extérieure des moyens anti-rotation (400) est configurée comme circulaire, polygonale, ou comme circulaire avec des aplats latéraux (430) ou des indentations concaves (460).

9. Unité de palier selon l'une quelconque des revendications précédentes, **caractérisée en ce que** la périphérie intérieure des moyens anti-rotation (400) est configurée comme circulaire ou polygonale, des sections droites (440) s'étendant parallèlement les unes aux autres ou des saillies convexes (470) étant prévues sur des zones latérales opposées des moyens anti-rotation (400).

10. Unité de palier selon l'une quelconque des revendications précédentes, **caractérisée en ce que** la douille de palier (300) a une zone de réception (310) pour les moyens anti-rotation (400), en particulier la zone de réception (310) étant une rainure s'étendant sur une périphérie extérieure de la douille de palier (300).

11. Unité de palier selon la revendication 10, si la revendication 10 est dépendante de la revendication 9, **caractérisée en ce que** la zone de réception (310) a des zones aplaties (320) s'étendant parallèlement les unes aux autres ou des indentations concaves (330) sur des zones périphériques opposées, les zones aplaties (320) ou les indentations concaves (330) interagissant avec les sections droites (440) ou les saillies convexes (470) des moyens anti-rotation (400) pour empêcher une rotation de la douille de palier (300) par rapport aux moyens anti-rotation (400).

12. Unité de palier selon l'une quelconque des revendications précédentes, **caractérisée en ce que** le boîtier de palier (100) présente au moins un trou radial (120) dans la zone des moyens anti-rotation (400) pour recevoir une goupille de verrouillage (600), la goupille de verrouillage (600) venant en prise à travers le trou (120) dans une saillie (480) des moyens anti-rotation (400) faisant face radialement vers l'intérieur pour former une connexion à verrouillage positif entre le boîtier de palier (100) et les moyens anti-rotation (400).

13. Dispositif de charge pour un moteur à combustion interne, comprenant :
un compresseur avec un carter de compresseur et une roue de compresseur agencée dans celui-ci ; et
une unité de palier (10) selon l'une quelconque des revendications précédentes.

14. Dispositif de charge selon la revendication 13, **caractérisé en ce que** le dispositif de charge est un turbocompresseur à gaz d'échappement, et comprend en outre une turbine avec un carter de turbine et une roue de turbine agencée à l'intérieur.
